# EUROPÄISCHE PATENTANMELDUNG

(11) **EP 0 872 846 A1**
(43) Veröffentlichungstag der Anmeldung: **21.10.1998**
(21) Anmeldenummer: 98106746.5
(22) Anmeldetag: 14.04.1998
(51) Int. Cl.: G11B 33/04, G11B 23/00

(54) **Klemmeinrichtung**

(30) Priorität: 16.04.1997 DE 19715941
(71) Anmelder: BASF AKTIENGESELLSCHAFT, 67056 Ludwigshafen (DE)
(72) Erfinder: Heyder, Gerhard, 74743 Seckach (DE)
(74) Vertreter: Isenbruck, Günter, Dr.

(57) **Zusammenfassung**

Klemmeinrichtung mit einer Klemmunterlage (10) zur Aufnahme eines Klemmgutes (20) und mit mindestens einem Klemmhebel (30) zum Festklemmen des Klemmgutes (20) auf der Klemmunterlage (10), wobei die Klemmeinrichtung eine Betätigungseinrichtung (40) aufweist, die mit Hilfe eines ersten Filmscharniers (50) mit dem Klemmhebel (30) schwenkbar verbunden ist, und der Klemmhebel (30) mit Hilfe eines zweiten Filmscharniers (60) mit der Klemmunterlage (10) schwenkbar verbunden ist, so daß der Klemmhebel (30) infolge einer Veränderung der Position der Betätigungseinrichtung (40) relativ zu der Klemmunterlage (10) derart betätigt wird, daß er das Klemmgut (20) auf der Klemmunterlage (10) festklemmt oder freigibt.

## Beschreibung

Die vorliegende Erfindung bezieht sich auf eine Klemmeinrichtung für eine Vielzahl von Gegenstanden, insbesondere flachen Gegenstanden, wie Compact Discs, Kalender oder Schautafeln.

Bekannte Klemmvorrichtungen, wie sie etwa in DE 42 20 406 beschrieben sind, bestehen aus einer Klemmunterlage und einem Klemmhebel, der das Klemmgut, etwa ein Schriftstuck, auf der Klemmunterlage festklemmt. Die Betätigung des Klemmhebels, der meistens aus Metall oder Plastik besteht, erfolgt dadurch, daß der federbelastete Klemmhebel von Hand angehoben, das Klemmgut unter ihn positioniert und der Klemmhebel losgelassen wird, sodaß er mit Hilfe der ihn belastenden Federkraft das Klemmgut auf die Klemmunterlage drückt. Diese direkte und manuelle Betätigung weist vor allem den Nachteil auf, daß der Klemmhebel derart groß ausgebildet werden muß, daß man ihn mit den Fingern mühelos fassen und betätigen kann. Für die Verpackung von Compact Discs scheidet diese einfache Konstruktion zum Beispiel aus, denn bei den gewünschten geringen Abmessungen der Verpackungsbox müßte der Klemmhebel so klein gestaltet werden, daß seine Handhabung ein Übermaß an Fingerfertigkeit oder Geduld erfordern würde.

Konventionelle Verpackungsboxen für Compact Discs, die aus einem Bodenteil und einem damit schwenkbar verbundenen Deckelteil bestehen, weisen deshalb einen Klemmechanismus auf, der aus einer Vielzahl von federnden, speziell ausgeformten Zungen besteht, die in der Mitte des Bodenteils angeordnet sind. Beim Einlegen einer Compact Disc werden diese Zungen von der mittigen Aussparung der Compact Disc zusammengedrückt, sodaß diese vollständig eingelegt werden kann. Nachdem die Compact Disc ihre endgültige Position auf dem Bodenteil der Verpackungsbox erreicht hat, federn die Zungen in ihre Ausgangsposition zurück und verrasten die Disc in ihrer Verpackungsposition. Diese Verrastung wird beim Entnehmen der Compact Disc aus der Verpackungsbox dadurch wieder gelöst, daß man mit einem Finger die federnden Zungen niederdrückt, sodaß sie die Compact Disc freigeben, während man mit den anderen Fingern derselben Hand die Scheibe entnimmt. Diese Handhabung erfordert eine Geschicklichkeit, die nicht jedermann jederzeit eigen ist. Ein weiterer Nachteil dieser Boxen besteht darin, daß die federnden Zungen eine Aussparung in der Mitte der Box freilassen, durch die Verschmutzungen, insbesondere Staub eindringen können.

Aufgabe der vorliegenden Erfindung ist es deshalb eine Klemmvorrichtung zur Verfügung zu stellen, die einfach handbar ist und mit der kompakte Gegenstände sicher gehaltert werden können. Insbesondere sollen verbesserte Verpackungsboxen für Compact Discs zur Verfügung gestellt werden, die die oben beschriebenen Nachteile vermeiden.

Diese Aufgabe wird durch eine Klemmeinrichtung gelöst, die mindestens eine Klemmunterlage zur Aufnahme eines Klemmgutes und mindestens einen Klemmhebel zum Festklemmen des Klemmgutes auf der Klemmunterlage umfaßt. Erfindungsgemäß weist die Klemmeinrichtung eine Betätigungseinrichtung auf, die mit Hilfe eines ersten Filmscharniers mit dem Klemmhebel schwenkbar verbunden ist. Ferner ist der Klemmhebel mit Hilfe eines zweiten Filmscharniers mit der Klemmunterlage schwenkbar verbunden. Klemmhebel, Betätigungseinrichtung und Klemmunterlage sind dabei derart zueinander beweglich angeordnet, daß der Klemmhebel infolge einer Veränderung der Position der Betätigungseinrichtung relativ zu der Klemmunterlage derart betätigt wird, daß er das Klemmgut auf der Klemmunterlage festklemmt bzw. freigibt.

Filmscharnier meint dabei eine winkelbewegliche Verbindung zwischen zwei Konstruktionsteilen, die entweder einstückig mit diesen Teilen ausgeführt ist oder aber mit diesen Teilen dauerhaft verbunden ist, etwa durch Klebung oder Verschmelzung. Bekannte Beispiele für Filmscharniere sind die Verbindungen von Kappen von Geschirrspülmittelflaschen, die auf diese Weise unverlierbar mit den Flaschen verbunden sind.

Vorzugsweise ist die Betätigungseinrichtung derart ausgebildet und in der Klemmeinrichtung angeordnet, daß sie im wesentlichen ausschließlich senkrecht zu der Klemmunterlage beweglich ist. Das Klemmgut wird also bei einer horizontal angeordneten Klemmunterlage, zum Beispiel in einer Verpackungsbox für Compact Discs, durch eine einfache Auf- und Abwärtsbewegung der Betätigungseinrichtung festgeklemmt und wieder freigesetzt.

Bevorzugt ist auch eine Klemmeinrichtung, bei der die Betätigungseinrichtung ein Körper mit einem im wesentlichen zylindrischen Querschnitt, zum Beispiel ein Stift oder Stab ist. Dabei ist es besonders vorteilhaft, wenn die Filmscharniere die Betätigungseinrichtung vollständig umgeben. Dadurch werden Öffnungen vermieden, durch die Staub und andere Verunreinigungen in den Klemmbereich eintreten können.

Ein besonders geeignetes Material für die erfindungsgemäße Klemmeinrichtung ist Polypropylen. Dieses ist nicht nur leicht zu verarbeiten, sondern erlaubt auch die Formung aller Teile, einschließlich der Filmscharniere aus demselben Material. Bei Verwendung eines derartig vielseitig verwendbaren Materials wird die Klemmeinrichtung vorzugsweise einteilig spritzgegossen.

Erfindungsgemäß wird weiterhin eine Verpackungseinrichtung, insbesondere für Compact Discs, mit einem Bodenteil und einem Deckelteil, das mit dem Bodenteil schwenkbar verbunden ist, zur Verfügung gestellt. Erfindungsgemäß weist diese Verpackungseinrichtung eine Klemmeinrichtung auf, wie sie oben als erfindungsgemaß beschrieben wurde.

Die Erfindung wird im Folgenden an Hand der Figuren 1 bis 4 im Detail beschrieben. Dabei zeigen die
- Fig. 1:: Prinzipskizze einer erfindungsgemaßen Klemmeinrichtung im geöffneten Zustand; die
- Fig. 2:: Prinzipskizze der erfindungsgemäßen Klemmeinrichtung nach Figur 1 im geschlossenen Zustand; die
- Fig. 3:: Prinzipskizze einer erfindungsgemäßen Verpackungsbox für Compact Discs im geöffneten Zustand, und die
- Fig. 4:: Prinzipskizze der erfindungsgemaßen Verpackungsbox nach Figur 3 im geschlossenen Zustand.

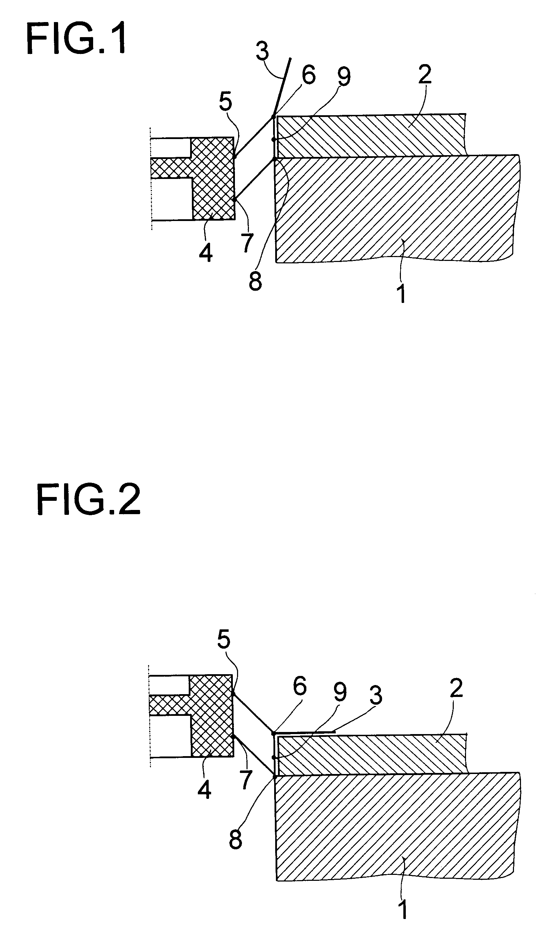

Fig. 1 zeigt eine erfindungsgemäße Klemmeirrichtung im geöffneten Zustand. Auf der Klemmunterlage 1 ist ein Klemmgut 2, zum Beispiel ein Kalender oder ein Werkstück, angeordnet, aber noch nicht festgeklemmt. Der geknickte Klemmhebel 3 ist dementsprechend noch nicht in Kontakt mit dem Klemmgut 2. Der Klemmhebel 3 ist einerseits über ein Filmscharnier 6 mit der Klemmunterlage 1 verbunden. Im Rahmen der Erfindung spielt es dabei keine Rolle, ob diese Verbindung direkt oder indirekt ist, also ob der Klemmhebel 3 an der Klemmunterlage 1 oder an einem Bauteil montiert ist, das seinerseits, beweglich oder unbeweglich mit der Klemmunterlage 1 verbunden ist. In der gezeigten Anordnung ist der Klemmhebel 3 mit Hilfe des Filmscharniers 6 an der hochgezogenen Rückwand 9 der Klemmunterlage 1 angebracht. Andererseits ist der Klemmhebel 3 über das Filmscharnier 5 mit der Betätigungseinrichtung 4 verbunden. Der Klemmhebel 3 ist in Fig. 1 geknickt dargestellt. Erfindungsgemäß kann der Klemmhebel 3 aber auch jede andere geeignete Gestalt annehmen, zum Beispiel gerade ausgebildet sein. Insbesondere kann der Klemmhebel 3 aus mehreren Teilen aufgebaut sein, von denen sich etwa das eine zwischen den Filmscharnieren 5 und 6 erstreckt und das andere sich von dem Filmscharnier 6 weg erstreckt. Die verschiedenen Bauteile des Klemmhebels 3 können dabei dann auch zueinander beweglich angeordnet sein oder ganz verschiedene Eigenschaften aufweisen. So kann zum Beispiel ein Klemmhebel vorgesehen sein, der ein federndes oder besonders weiches Endstück aufweist. Ein solches Endstück kann dann auch über ein Scharnier mit dem restlichen Klemmhebel verbunden sein, um etwa Werkstücke zu halten, die am eingeklemmten Ende einen Wulst aufweisen, zum Beispiel infolge einer Heftung. Der geeignet gestaltete Klemmhebel 3 wird erfindungsgemaß jedenfalls über eine Betätigungseinrichtung 4 betätigt. Die Betätigungseinrichtung 4 kann dabei ebenfalls jede gewünschte und für den Anwendungszweck geeignete Form aufweisen. In Fig. 1 ist eine zylindrische Betätigungseinrichtung 4 gezeigt. Diese ist über zwei weitere Filmscharniere 7 und 8 mit der Klemmunterlage 1 verbunden, um auf einfache und sichere Weise eine vertikale Bewegung der Betätigungseinrichtung 4 zu gewährleisten. Statt mit den zusätzlichen Filmscharnieren 7 und 8 könnte die Betätigungseinrichtung 4 aber auch einfach in einer zylindrischen Führung geführt werden. Je nach Ausgestaltung der Betätigungseinrichtung 4 und des Klemmhebels 3 könnte eine Führung aber auch überhaupt entbehrlich sein.

Fig. 2 zeigt die erfindungsgemäße Klemmeinrichtung nach Fig. 1 in ihrem geschlossenem Zustand. Durch die Bewegung der Betätigungseinrichtung 4 vertikal nach oben wurde der Klemmhebel 3 derart nach unten gegen die Klemmunterlage 1 gekippt, daß er das Klemmgut 2 auf der Klemmunterlage 1 festklemmt. Um die Klemmung möglichst effektiv zu gestalten kann, wie oben beschrieben, der Klemmhebel 3 an die bestehende Klemmaufgabe, vor allem also an die Beschaffenheit des Klemmgutes 2 angepaßt werden. Dabei kann die Klemmung auch nach Art einer Überdruckpunktfeder erfolgen, wenn die Filmscharniere nämlich derart ausgelegt sind, daß zum Überschreiten etwa der horizontalen Position ein gewisser Widerstand überwunden werden muß. Das einmal festgeklemmte Klemmgut 2 kann dann nicht schon durch eine Erschütterung aus der Klemmung gelöst werden. Eine derartige Gestaltung wird im Rahmen der Erfindung als besonders vorteilhaft angesehen.

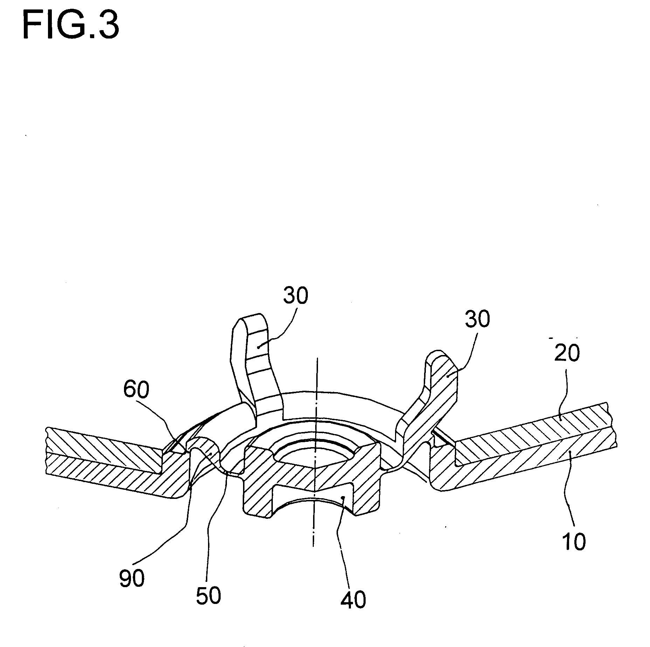

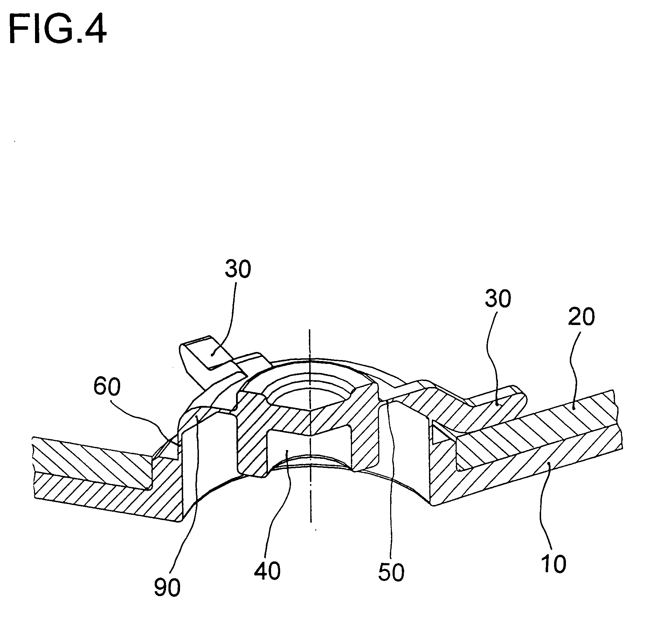

Die erfindungsgemäße Klemmeinrichtung, wie sie in den Figur. 1 und 2 beispielhaft beschrieben wurde, bietet eine Reihe von Vorteilen. So kann, bei Verwendung geeigneter Materialien, wie etwa Polypropylen, die gesamte Klemmeinrichtung einstückig spritzgegossen werden, sodaß Montageschritte vollständig oder weitgehend entfallen können. Die Klemmeinrichtung nach der Erfindung kann außerdem sehr robust und platzsparend zugleich ausgeführt werden. Schließlich kann eine erfindungsgemäße Klemmeinrichtung sehr bedienerfreundlich gestaltet werden, indem die Betätigungseinrichtung zum Beispiel beidseitig, also im Beispiel oben und unten, als griffiger Druckknopf ausgeführt wird, der etwa in einer zylindrischen Führung kippsicher gehaltert wird. Schließlich können mit der vorliegenden Erfindung auch Klemmeinrichtungen hergestellt werden, die das Klemmgut gegen schädliche Umwelteinflüße, insbesondere Verschmutzung schützen, weil die erfindungsgemäß verwendeten Filmscharniere naturgemäß dicht sind. Gerade dieser zuletzt genannte Vorteil rückt bei Verpackungsboxen für Compact Discs, wie sie in den Fig. 3 und 4 dargestellt werden, in den Mittelpunkt.

Fig. 3 zeigt eine Verpackungsbox für eine Compact Disc in geöffnetem Zustand. Die schematisch flächig gezeichnete Compact Disc 20 ist hier bereits in das Bodenteil 10 der Box eingelegt. Das die Box verschließende Deckelteil, das mit dem Bodenteil über ein Scharnier verbunden ist, ist hier nicht dargestellt. Die Betätigungseinrichtung 40 ist hier ein Zylinder, der nicht mehr separat geführt oder gehaltert ist, was allerdings auch möglich wäre. Sie ist umgeben von vollständig umlaufenden Filmscharnieren 50 und 60 und einem dazwischen befindlichen Zwischenstück 90, das die vertikale Beweglichkeit der Betätigungseinrichtung 40 erst ermöglicht. Die Klemmhebel 30, in einer Compact Disc Box vorzugsweise vier bis sechs Stück, sind direkt mit dem Zwischenstück 90 verbunden, sodaß sie mit diesem über Scharnier 50 gegen den Zylinder 40 und über Scharnier 60 gegen die Klemmunterlage 10 beweglich sind.

Fig. 4 zeigt die erfindungsgemaße Klemmeinrichtung nach Figur 3 in ihrem geschlossenen Zustand. Durch eine Bewegung des Zylinders 40 vertikal nach oben wurden die Klemmhebel 30 auf die Compact Disc 20 gekippt, sodaß sie diese festklemmen. Durch eine Bewegung des Zylinders 40 nach unten kann die Klemmung wieder gelöst werden, sodaß die Compact Disc aus der Verpackungsbox entnommen werden kann. Dabei kann die Betätigung des Zylinders 40 auf mehrere Weisen erfolgen. Eine Möglichkeit ist, wie oben bereits beschrieben, die Ausformung des Zylinders 40 als von innen (oben) und außen (unten) betätigbarer Druckknopf. Eine andere Möglichkeit ist ein nur von außen eindrückbarer und, aufgrund einer entsprechenden Gestaltung, auch wieder ausziehbarer Zylinder 40. Auch viele andere Konstruktionen und Formen der Betätigungseinrichtung und der Klemmhebel sind, wie oben bereits angedeutet, im Rahmen der vorliegenden Erfindung möglich. Vorzugsweise wird die Klemmeinrichtung auch hier nach Art einer Überdruckpunktfeder gestaltet.

Die in den Fig. 3 und 4 dargestellte erfindungsgemäße Verpackungsbox, die sich insbesondere für Compact Discs eignet, weist den erheblichen Vorteil auf, daß die eingelegte Scheibe völlig staubfrei aufbewahrt werden kann, weil das bisher für die federnde Klemmhalterung der Compact Disc notwendige Mittelloch im Bodenteil der Box entfallen kann. Im übrigen kommen auch hier die bereits oben angesprochenen allgemeinen Vorteile der Erfindung zum Tragen.

Die vorliegende Erfindung stellt somit eine einfache, sichere, staubdichte, bedienerfreundliche und leicht herstellbare Klemmeinrichtung, insbesondere für die Anwendung in Verpackungsboxen für Compact Discs zur Verfügung.

## Patentansprüche

1. Klemmeinrichtung mit einer Klemmunterlage (1;10) zur Aufnahme eines Klemmgutes (2;20) und mit mindestens einem Klemmhebel (3;30) zum Festklemmen des Klemmgutes (2;20) auf der Klemmunterlage (1;10),
**dadurch gekennzeichnet, daß**
die Klemmeinrichtung eine Betätigungseinrichtung (4;40) aufweist, die mit Hilfe eines ersten Filmscharniers (5;50) mit dem Klemmhebel (3;30) schwenkbar verbunden ist, und
der Klemmhebel (3;30) mit Hilfe eines zweiten Filmscharniers (6;60) mit der Klemmunterlage (1;10) schwenkbar verbunden ist,
sodaß der Klemmhebel (3;30) infolge einer Veränderung der Position der Betätigungseinrichtung (4;40) relativ zu der Klemmunterlage (1;10) derart betätigt wird, daß er das Klemmgut (2;20) auf der Klemmunterlage (1;10) festklemmt oder freigibt.

2. Klemmeinrichtung nach Anspruch 1, dadurch gekennzeichnet, daß die Betätigungseinrichtung (4;40) derart ausgebildet und angeordnet ist, daß sie senkrecht zu der Klemmunterlage (1;10) beweglich ist.

3. Klemmeinrichtung nach einem der vorhergehenden Ansprüche, dadurch gekennzeichnet, daß die Betätigungseinrichtung (4;40) ein zylindrischer Körper ist.

4. Klemmeinrichtung nach Anspruch 3, dadurch gekennzeichnet, daß die Filmscharniere (5;50) die Betätigungseinrichtung (4;40) vollständig umgeben.

5. Klemmeinrichtung nach einem der vorhergehenden Ansprüche, dadurch gekennzeichnet, daß sie einteilig spritzgegossen ist.

6. Klemmeinrichtung nach einem der vorhergehenden Ansprüche, dadurch gekennzeichnet, daß sie aus Polypropylen besteht.

7. Verpackungseinrichtung, insbesondere für Compact Discs, mit einem Bodenteil und einem Deckelteil, das mit dem Bodenteil schwenkbar verbunden ist, dadurch gekennzeichnet, daß die Verpackungseinrichtung eine Klemmeinrichtung nach einem der vorhergehenden Ansprüche aufweist.
